# EUROPÄISCHE PATENTSCHRIFT

(11) **EP 4 241 950 B1**
(45) Veröffentlichungstag und Bekanntmachung des Hinweises auf die Patenterteilung: **08.10.2025**
(21) Anmeldenummer: 22161409.2
(22) Anmeldetag: 10.03.2022
(51) Int. Cl.: B27N 3/00, B27N 3/02, B27N 3/08

(54) **VERFAHREN ZUR HERSTELLUNG EINER SPANPLATTE SOWIE SPANPLATTE**
CHIPBOARD AND METHOD FOR PRODUCING CHIPBOARD
PROCÉDÉ DE FABRICATION D'UN PANNEAU DE PARTICULES DE BOIS, AINSI QUE PANNEAU DE PARTICULES DE BOIS

(43) Veröffentlichungstag der Anmeldung: 13.09.2023
(73) Patentinhaber: SWISS KRONO Tec AG, 6004 Luzern (CH)
(72) Erfinder: Braun, Roger, 6130 WILLISAU (CH); Hasch, Joachim, Prof. Dr., 10317 Berlin (DE); Heinemann, Christian, 6130 WILLISAU (CH); Noci, Fabian, 6110 Wolhusen (CH)
(74) Vertreter: Kalkoff & Partner Patentanwälte mbB

(56) Entgegenhaltungen:
- EP-A2- 3 736 095
- WO-A1-2011/107900
- WO-A1-2012/031922
- WO-A1-2017/097506

## Beschreibung

Die Erfindung betrifft ein Verfahren zur Herstellung einer Spanplatte sowie eine Spanplatte.

Verfahren eingangs genannter Art werden dazu verwendet, um aus Holz, beispielsweise aus Rundholz, Frischholz, Altholz oder Restholz oder aus Einjahrespflanzen wie Stroh oder Bagasse bereitgestellte Späne sowie Sägemehl und/oder Sägespäne zu Spanplatten zu verpressen.

Für die Herstellung von Spanplatten wird das Holz, z.B. Rund- oder Altholz oder die Einjahrespflanzen in einem ersten Zerkleinerungsschritt beispielsweise in einem Messerringzerspaner zu Spänen zerkleinert. Zur Herstellung von feinen Spänen können die Späne z.B. in einer Doppelstrom- oder in einer Prallmühle weiter zerkleinert werden. Vor einer möglichen Zwischenlagerung in Silos werden die Späne üblicherweise getrocknet. Hierzu werden meist Einzug- oder Dreizug-Trommeltrockner oder Bandtrockner eingesetzt.

Vor dem Pressen in einer Presse werden die Späne z.B. mittels mechanischer Siebe oder durch Gebläse fraktioniert und mit einem Klebstoff beleimt. Bei der Beleimung der Späne wird meist ein Klebstoffanteil von 2 bis 11 Gew.-% /atro Holz eingesetzt. Die beleimten Späne werden z.B. mittels Wind-, Wurf-, oder Rollenverfahren gestreut und der hierdurch geformte Spankuchen wird anschließend z.B. in einer kontinuierlichen und/oder diskontinuierlichen Presse zu einer Spanplatte verpresst.

Mit bekannten Verfahren hergestellte Spanplatten haben sich in verschiedenen Anwendungsformen in mehreren Industrie- und Baubranchen, insbesondere für den Innenausbau oder die Möbelindustrie etabliert.

Beispielsweise offenbaren die WO 2017/097506 ein Verfahren zur Herstellung von Holzwerkstoffplatten mit reduzierter Emission an flüchtigen organischen Verbindungen oder die EP 3 736 095 A2 ein Verfahren zum Herstellen eines plattenförmigen Werkstoffs aus Fasern. Aus der WO 2011/107900 A1 ist ein Verfahren zur Herstellung eines lignocellulosehaltigen Materials mit expandierten Kunststoffpartikeln bekannt und die WO2012/031922 A1 offenbart einen mehrschichtigen lignocellulosehaltigen Formkörper mit geringer Formaldehydemission.

Spanplatten weisen jedoch nur eine begrenzte Festigkeit und eine schlechte Wasserbeständigkeit bzw. Feuchtebeständigkeit auf, wodurch die Anwendungsmöglichkeiten stark eingeschränkt sind. Die längerfristige oder gar dauerhafte Verwendung im Außenbereich ist für eine bekannte, ggf. ummantelte Spanplatte kaum möglich.

Es kann als Aufgabe angesehen werden, ein Verfahren vorzuschlagen, bei dem eine Spanplatte mit verbesserten Eigenschaften, insbesondere mit erhöhter Festigkeit hergestellt werden kann. Ferner liegt der Erfindung die Aufgabe zugrunde, eine Spanplatte verbesserten Eigenschaften, insbesondere mit erhöhter Festigkeit bereitzustellen.

Die Aufgabe wird gelöst durch ein Verfahren zur Herstellung einer Spanplatte gemäß Anspruch 1 und eine Spanplatte gemäß Anspruch 13. Abhängige Ansprüche beziehen sich auf vorteilhafte Weiterbildungen der Erfindung.

Das erfindungsgemäße Verfahren zur Herstellung einer Spanplatte weist die folgenden Schritte auf:
- Bereitstellen von aus Zerspanung gewonnenen Spänen aus Holz;
- Bereitstellen von wenigstens einem Klebstoff,
- Aufbringen des Klebstoffs auf die Späne, wobei ein Klebstoffanteil von mindestens 12 Gew.-%/atro Holz auf die Späne aufgetragen wird;
- Formen eines ein- oder mehrschichtigen Spankuchens,
- Verpressen des Spankuchens in einer Heißpresse zum Erzeugen einer Spanplatte.

Die Schritte des Verfahrens entsprechen denen eines konventionellen Verfahrens z. B. zum Herstellen einer Flachpressplatte. Erfindungsgemäß wird jedoch ein Klebstoffanteil von mindestens 12 Gew.-% /atro Holz eingesetzt. Bezogen auf den Anteil an Spänen wird vorzugsweise ein Klebstoffanteil von mindestens 15 Gew.-%/atro Holz, bevorzugt mindestens 17 Gew.-% /atro Holz, besonders bevorzugt mind. 20 Gew.-% /atro Holz, ganz besonders bevorzugt mind. 25 Gew.-% /atro Holz auf die Späne aufgebracht. Unter der Voraussetzung, dass nach der Beleimung eine Obergrenze eines Feuchtegehalts der Schicht und/oder Schichten des Spankuchens eingehalten wird, kann ein beliebig hoher Klebstoffanteil auf die Späne aufgebracht werden. Vorzugsweise liegt die Obergrenze des Feuchtegehalts zwischen 1 Gew.-%/ beleimtes Holz bis 20 Gew.-%/ beleimtes Holz, bevorzugt zwischen 3 Gew.-%/ beleimtes Holz bis 18 Gew.-%/ beleimtes Holz, besonders bevorzugt zwischen 5 Gew.-%/ beleimtes Holz bis 15 Gew.-%/ beleimtes Holz.

Der Klebstoffanteil wird bezogen auf die Späne ausgedrückt, d.h., dass der Anteil des Klebstoffs mit Bezug auf das Gewicht der eingesetzten Späne angegeben wird. Bei Spänen, die Feuchtigkeit aufnehmen können (z.B. Holzspäne), wird der Klebstoffanteil auf bis zur Gewichtskonstanz getrocknetes Holz bezogen. Die Späne werden bei 103±2 °C bis zur Gewichtskonstanz getrocknet und als absolut trockenes Holz bezeichnet (atro Holz: absolut trockenes Holz). Der Anteil des Klebstoffs wird als 100 % Feststoff, also ohne etwa zugesetzte Flüssigkeit angegeben.

Für die Bereitstellung von Spänen wird lignocellulosisches Material, beispielsweise Holz, z.B. Rundholz, Frischholz, Altholz oder Restholz oder Einjahrespflanzen, typisch Stroh oder Bagasse, in einem ein- oder mehrstufigen Zerspanungsvorgang zerkleinert. Typische Vorrichtungen für eine Zerspanung des Holzes sind z.B. Trommel- und Scheibenhacker sowie Messerringzerspaner. Zusätzlich zu den aus der Zerspanung gewonnen Spänen können beispielsweise auch Sägespäne und Sägemehl bereitgestellt werden. Die Späne weisen bevorzugt eine Länge von 0,5 mm bis 50 mm, eine Breite von 0,1 bis 20 mm und eine Dicke von 0,05 mm bis 2 mm auf. Dabei wird oft in grobe Späne mit einer Länge von 5 mm bis 50 mm, einer Breite von 1 bis 20 mm und einer Dicke von 0,2 bis 2 mm und in feine Späne mit einer Länge von 0,5 mm bis 25 mm, einer Breite von 0,1 bis 5 mm und einer Dicke von 0,05 bis 1 mm unterschieden.

Weisen die Späne Feuchtigkeit auf, so wie es z. B. für Holzspäne aus Frischholz üblich ist, sollte der Feuchtegehalt vor dem Verpressen des Spankuchens so eingestellt werden, dass nach dem Verpressen, insbesondere bei gleichbleibenden Klimabedingungen ohne Wasserlagerung eine formstabile, nicht quellende oder schwindende Spanplatte vorliegt. Beim Verpressen, bspw. dem Spanplattenprozess ist es bevorzugt, wenn die Späne vor der Beleimung einen Feuchtegehalt von 1 Gew.-%/ atro Holz bis 4 Gew.-%/ atro Holz aufweisen. Um die gewünschte Feuchtigkeit einzustellen, werden die Späne getrocknet.

Die Späne können vor oder bevorzugt nach dem Trocknen sortiert, z.B. gesiebt werden. Beim Sortieren werden die Späne beispielsweise in vier Fraktionen (Staub, feine Späne, grobe Späne und übergroße Späne) aufgeteilt. Staub wird vorzugsweise von den anderen Fraktionen getrennt und bevorzugt energetisch verwertet. Übergroße und/oder grobe Späne können ausgesiebt und bevorzugt nachzerkleinert werden.

Die Erfinder haben erkannt, dass der hohe Klebstoffanteil bei der Beleimung der Späne die Herstellung einer wasserbeständigen und damit auch feuchtebeständigen Spanplatte erlaubt, die darüber hinaus eine hohe Festigkeit aufweist. Es hat sich zudem überraschenderweise herausgestellt, dass eine Quellung der Spanplatte, z.B. durch eine 24-stündige Wasserlagerung, durch den hohen Klebstoffanteil reversibel wird. Die Bestimmung des Quellverhaltes erfolgt bevorzugt nach DIN EN 317. Die Spanplatte erlangt bereits nach einer 24-stündigen Rücktrocknung, z.B. bei Raumtemperatur ihr Ausgangsmaß wieder, bspw. Anfangslänge, Anfangsbreite und Anfangsdicke vor 24-stündiger Wasserlagerung. Hieraus lässt sich folgern, dass die Klebstoffverbindungen während der Wassereinwirkung im Wesentlichen schadensfrei bleiben. Dieses Quell-Schwind-Verhalten wurde bisher bei Spanplatten nicht beobachtet, üblich war vielmehr eine anteilige, unumkehrbare Restverformung. Durch die vollständige Rückbildung der Verformung, die durch das Quellen erzeugt wird, können für die Spanplatte neue Anwendungsgebiete erschlossen werden.

Erfindungsgemäß wird zur Herstellung der Spanplatte ein Klebstoff eingesetzt, der eine erste, duroplastische Komponente und eine zweite, thermoplastische Komponente aufweist. Der Klebstoff wird in einem Anteil von mindestens 12 Gew.-%/ atro Holz bis 60 Gew.-%/ atro Holz, bevorzugt von 15 Gew.-%/ atro Holz bis 45 Gew.-%/ atro Holz, besonders bevorzugt von 18 Gew.-%/ atro Holz bis 35 Gew.-%/ atro Holz, insbesondere von 20 Gew.-%/ atro Holz bis 33 Gew.-%/ atro Holz, vorteilhaft von 24 Gew.-%/ atro Holz bis 31 Gew.-%/ atro Holz eingesetzt.

Gemäß einer vorteilhaften Ausführung der Erfindung werden als duroplastische Komponente ein Kondensationsharz, insbesondere Aminoplaste, wie Melaminformaldehydharz, Harnstoffformaldehydharz (UF-Harz), oder Benzoguanaminharz sowie Phenoplaste, wie Phenolformaldehydharz (PF-Harz), jeweils einzeln oder in Mischung eingesetzt. Aminoplaste werden in wässriger Lösung z.B. als Melaminharz, üblicherweise als Melaminformaldehydharz (MF-Harz), eingesetzt, wobei der Feststoffgehalt des Aminoplasts bevorzugt mindestens 45 Gew.-% bezogen auf die wässrige Lösung beträgt; vorteilhaft beträgt der Feststoffgehalt über 50 Gew.-%. Die Obergrenze des Feststoffgehalts wird durch die Löslichkeit und ggf. Verarbeitbarkeit des Aminoplasts im Produktionsprozess, z.B. in Sprühdüsen oder Hochdruckbeleimverfahren vorgegeben.

Bevorzugt weist der Klebstoff zumindest als erste Komponente Melaminharz, z. B. als MF-Harz (Melaminformaldehydharz) auf. Melaminharz wird bevorzugt, weil es sich als wenig-quellend und wenig-hygroskopisch sowie als beständig gegen Hydrolyse erweist. Alternativen sind Phenolharz, Harnstoffharz oder Mischungen oder Kombinationen von mehreren dieser duroplastischen ersten Komponenten. Obwohl Harnstoffharz nicht beständig gegen heißes Wasser ist, kann es überraschenderweise, vor allem in Mischung mit Melaminharz und/oder Phenolharz, zur Herstellung der Spanplatte eingesetzt werden. Insbesondere Melaminharz kann entweder allein als erste Komponente eingesetzt werden oder in Kombination mit einer oder mehreren der anderen duroplastischen Komponenten. Der Anteil des UF-Harzes beträgt bevorzugt bis zu 50 Gew.-% des MF- oder PF-Harzes, ohne dass die Wasserbeständigkeit, bzw. -festigkeit der Spanplatte beeinträchtigt wird.

In Kombination bedeutet im Zusammenhang mit dieser Erfindung, dass Mischungen von Harzen der ersten Komponente eingesetzt werden können, wobei entweder die Mischung von zwei oder mehr Harzen der ersten Komponenten gleichzeitig auf die Späne aufgebracht wird. Oder es werden mehrere verschiedene Harze der ersten Komponente nacheinander eingesetzt, z. B. weil sie nicht in Mischung eingesetzt werden können oder weil ein getrenntes Aufbringen von verschiedenen Harzen der ersten Komponente bzw. einzelnen Harzen der ersten Komponente des Klebstoffs vorteilhafte Wirkung, bspw. auf die späteren Produkt- und/oder Anwendungseigenschaften, hat.

Bevorzugt wird als zweite, thermoplastische Komponente des Klebstoffs technisches Diphenylmethandiisocyanat (PMDI) auf die Späne gebracht. Alternativ oder zusätzlich dazu können weitere Substanzen wie z. B. Methylendiphenylisocyanat (MDI), auch in emulgierter Form als eMDI, aber auch Polyurethan als zweite Komponente eingesetzt werden. Der Anteil der zweiten Komponente beträgt bevorzugt mehr als 1 Gew.-%, insbesondere 3 Gew.-% oder mehr, vorteilhaft 5 Gew.-% oder mehr, jeweils bezogen auf atro Holz. Damit liegt der Anteil der zweiten Komponente, z. B. PMDI, in der Spanplatte signifikant höher als bei üblichen Spanplatten. Erfindungsgemäß wird die zweite Komponente des Klebstoffs, z. B. PMDI, bei einem mehrschichtigen Aufbau der Platte auch, bzw. insbesondere in den Deckschichten der Spanplatte eingesetzt. Bevorzugt wird die zweite Komponente in gleicher Menge in der Mittelschicht und in der Deckschicht eingesetzt. Auch hier können mehrere Substanzen, die als zweite Komponente geeignet sind, entweder in Mischung miteinander gleichzeitig oder einzeln nacheinander auf Späne aufgebracht werden.

Vorzugsweise kann der ersten und zweite Komponente des Klebstoffs zumindest eine dritte Komponente, beispielsweise Polyol oder Polyether, jeweils bevorzugt als Feststoff beigegeben werden. Die dritte Komponente kann mit einem Anteil von bis zu 15 Gew.-%, bevorzugt von bis zu 10 Gew.-%, besonders bevorzugt mit einem Anteil von 2 bis 5 Gew.-% bezogen die Gesamtmenge des Klebstoffs beigegeben werden.

Die Spanplatte wird erfindungsgemäß durch den Zusatz eines Elastomers oder Thermoplasten, der als elastifizierender Zusatz eingesetzt wird, z. B. durch Zusatz von Polyvinylacetat (PVAc) oder Ethyl-Vinyl-Acetat in ihren elastischen Eigenschaften modifiziert, insbesondere verbessert. Acrylat, Styrolacrylat oder Polyurethan (PU) werden zum Elastifizieren der erfindungsgemäßen Spanplatte eingesetzt, erfindungsgemäß in Form eines flüssigen Zusatzes wie z. B. einer Dispersion oder Emulsion, weil sie wasserfest sind. Bevorzugt werden Acrylat, Styrolacrylat und PU mit einer Glasübergangstemperatur von TG kleiner 0 °C eingesetzt. Aber auch Mono- oder Diethylenglykol können alternativ zum Elastifizieren der Spanplatte erfindungsgemäß verwendet werden. Die vorstehend genannten elastifizierenden Zusätze können jeweils für sich allein, aber auch in Mischung eingesetzt werden. Der Zusatz von Elastomeren oder Thermoplasten reduziert die Sprödigkeit der Spanplatte und verbessert deren elastische Eigenschaften, z. B. den E-Modul. Außerdem bewirkt der Zusatz von elastifizierenden Zusätzen ein besseres Planliegen der Spanplatte. Der elastifizierende Zusatz wird erfindungsgemäß als Feststoff berechnet anteilig bezogen auf die die Gesamtmenge der Spanplatte (atro) in einer Menge von 1 Gew.-% bis zu 5 Gew.-%, vorteilhaft 2 Gew.-% bis 4 Gew.-% eingesetzt. Die elastifizierenden Zusätze werden beispielsweise dem Klebstoff, z. B. Melaminharz, vor dem Auftragen auf die Späne zugesetzt und gemeinsam mit dem Klebstoff auf die Späne aufgetragen. Bevorzugt wird das Mittel zum Elastifizieren vor oder, weiter bevorzugt, nach dem Klebstoff auf die Späne aufgetragen.

Wie vorstehend beschrieben werden eine erste und eine zweite, ggf. auch mehr Komponenten in Kombination als Klebstoff eingesetzt. Es wird bevorzugt, wenn der Klebstoff überwiegend eine erste Komponente, insbesondere Melaminharz aufweist. Es wird weiter bevorzugt, wenn der Anteil der ersten Komponente am Gesamteinsatz des Klebstoffs 15 Gew.-%, insbesondere 20 Gew.-% übersteigt. Die erste Komponente und die zweite Komponente des Klebstoffs können in einem weiten Rahmen stufenlos je nach den Anforderungen an die Spanplatte eingestellt werden. Dies betrifft vorzugsweise bei einem mehrschichtigen Plattenaufbau sowohl die Mittelschicht als auch die weiteren Schichten. Sie werden vorzugsweise in einem Verhältnis von 2:1, bevorzugt 3:1, besonders bevorzugt 4:1 oder 5:1 von erster Komponente zu zweiter Komponente bzw. in einem Verhältnis zwischen diesen Werten auf die Späne aufgebracht. Weist die Spanplatte Deckschichten auf, wird im Vergleich zur Mittellage bevorzugt ein höherer Anteil der ersten Komponente des Klebstoffs eingesetzt.

Der Klebstoff wird in der Regel in flüssiger Form bereitgestellt, kann aber auch als Feststoff, z. B. in Form von Partikeln bzw. Pulver vorliegen. Der Klebstoff kann in reiner Form bereitgestellt werden oder -was die Regel ist- in flüssiger Form anteilig entweder in Lösungsmittel oder in Wasser entsprechend als Dispersion bzw. Emulsion. Im Zusammenhang mit dieser Erfindung wird Klebstoff immer bezogen auf 100 % Feststoff, also ohne z.B. den Lösungsmittel- oder Wasseranteil angegeben. Das Aufbringen, insbesondere Auftragen des Klebstoffs auf die Späne erfolgt meist durch Sprühen, z. B. durch eine Mehrzahl von Düsen, z.B. Hochdruckdüsen, die einen Sprühnebel des Klebstoffs erzeugen und die beispielsweise um einen Abwärtsstrom von Spänen herum angeordnet sein können. Typische Ausführungen für eine solche Beleimungsvorrichtung sind z. B. ein sogenannter Fallschacht und/oder zusätzlich ein konventioneller Beleimungsmischer, die bei der Spanplattenherstellung eingesetzt werden. Grobe Späne werden vorzugsweise in einem Fallschacht beleimt und anschließend durch einen konventionellen Beleimungsmischer geführt, wobei in diesem Beleimungsmischer vorzugsweise eine oder mehrere der Komponenten des Klebstoffs aufgebracht werden. Feine Späne werden in einem konventionellen Beleimungsmischer und/oder einem Fallschacht beleimt.

Die Oberfläche der Späne wird mit Klebstofftröpfchen bzw. durch einen Klebstoffnebel benetzt. Die mit Klebstoff benetzten Späne werden zu einem Spankuchen geformt und anschließend verpresst. Dabei härtet, wenn ein duroplastischer Klebstoff eingesetzt wird, der Klebstoff unter Einwirkung von erhöhtem Druck und erhöhter Temperatur aus; er polymerisiert beispielsweise in einer irreversiblen Additions- oder Kondensationsreaktion. Wird ein thermoplastischer Klebstoff eingesetzt, so bindet dieser thermisch reversibel ab. Der thermoplastische Klebstoff verankert sich beim Verpressen mechanisch mit den Spänen. Beide Komponenten des Klebstoffs werden vorzugsweise in Kombination miteinander eingesetzt.

Der Klebstoff kann, je nach Art, Menge oder Kombination der Komponenten des Klebstoffs bevorzugt in einem Durchgang oder in mehreren Durchgängen auf die Späne aufgebracht werden. Optional können die Späne nach einem Auftrag z. B. einer Komponente des Klebstoffs getrocknet werden.

Das Formen des Spankuchens erfolgt, wie bei Spänen üblich, in der Regel durch Streuen, beispielsweise mittels des Windstreuverfahrens und/oder Wurfstreuverfahrens. Die mit der gesamten Menge des Klebstoffs beleimten Späne werden auf einen Träger, meist auf ein Förderband, gestreut, z.B. in einer homogenen Schicht, oder aber in mehreren Schichten, wobei die Schichten eine unterschiedliche Zusammensetzung hinsichtlich Spänen, Klebstoff oder ggf. Additiven aufweisen können. Der gestreute Spankuchen wird auf dem Träger ggf. zuerst durch eine Vorpresse vorverdichtet und anschließend in einer Presse verpresst. Die Presse wirkt dabei mittels Presselementen, z.B. Pressblechen oder Pressbändern, auf die Ober- und Unterseite des Spankuchens bzw. der Spanplatte ein. Beim Aushärten bzw. Abbinden, das unter Einwirkung von Druck und Temperatur im Wesentlichen auf die Ober- und Unterseite des Spankuchens erfolgt, entsteht eine Spanplatte mit durch die Presse vorgegebener Breite und ggf. Länge bzw. bei einer kontinuierlichen Presse unendlicher Länge und einer durch den Abstand der Presselemente vorgegebenen Dicke.

Grundsätzlich ist jede Presse, die in ausreichender Weise Druck und Temperatur aufbringt, zur Herstellung von Spanplatten geeignet, sowohl eine Plattenpresse, in der der Spankuchen, bzw. die Spanplatte zwischen zwei Blechen verpresst wird, als auch kontinuierliche Heißpressen, z. B. eine kontinuierliche Doppelbandheißpresse in Form von umlaufenden, beheizten Pressbändern aus Metall geeignet. In dieser wird der Spankuchen, bzw. die Spanplatte zwischen zwei umlaufenden Pressbändern gepresst und die sich bildende Spanplatte wird von den umlaufenden Pressbändern in vorgegebener Geschwindigkeit durch die Presse transportiert. Bevorzugt werden Heißpressen eingesetzt, deren Presselemente, z.B. in Form von Pressblechen oder von umlaufenden Pressbändern, auf eine vorgegebene Temperatur aufgeheizt sind. Geeignete Presstemperaturen, gemessen als Temperatur der Presselemente, können von 150 °C bis 240 °C, bevorzugt von 160 °C bis 220 °C gewählt werden. Je dünner die Platte, desto niedriger kann die Presstemperatur gewählt werden. Geeignete Pressdrücke liegen beispielsweise in einem Bereich von 2 N/mm² bis 5 N/mm², bevorzugt 3 N/mm² bis 5 N/mm², besonders bevorzugt 3,5 N/mm² bis 5N/mm².

Der Pressfaktor, also die Zeit des Einwirkens der Presselemente auf den Spankuchen, beträgt vorteilhaft mindestens 6 Sekunden/mm Plattendicke (im Folgenden: s/mm) bis 20 s/mm, bevorzugt 8 s/mm bis 18 s/mm besonders bevorzugt 9 s/mm bis 15 s/mm.

Damit liegt der Pressfaktor signifikant höher als bei vergleichbaren, bekannten Standardspanplatten des Typs P2 gemäß DIN EN 312, wo er bis zu 5,5 s/mm beträgt.

Besonders bevorzugt werden die Späne, bzw. der Spankuchen zu einer Spanplatte mit einer ungeraden Anzahl an Schichten verpresst. Beispielsweise weist die Spanplatte drei oder fünf übereinanderliegende Schichten auf. Bei einer Spanplatte mit drei Schichten ist z.B. eine Mittelschicht zwischen zwei Deckschichten angeordnet. Bevorzugt werden die Späne beim Formen des Spankuchens bereits für die Bildung der unterschiedlichen Schichten gestreut. Die Deckschichten weisen vorzugsweise größtenteils feine Späne auf, die bevorzugt mittels des Windstreuverfahrens gestreut werden. In der Mittelschicht sind vorzugsweise größtenteils grobe Späne vorgesehen, die z. B. mittels des Wurfstreuverfahrens gestreut werden. Die Mittelschicht besteht typischer Weise aus einem Anteil von mindestens 30 Gew.-%, bevorzugt mindestens 45 Gew.-%, besonders bevorzugt mindestens 60 Gew.-% einer verpressten Spanplatte. Die Deckschichten werden symmetrisch oder unsymmetrisch bezogen auf ihren gewichtsmäßigen Anteil zueinander gestreut. Besteht die Spanplatte nach der Erfindung aus einem einschichtigen Aufbau, werden unterschiedliche Spanfraktionen der vorstehend beschriebenen groben und feinen Späne in einer Schicht zusammengeführt.

Dem eigentlichen Heißpressvorgang kann eine Vorpresse zum Verdichten des Spankuchens vorgeschaltet sein. Grundsätzlich kann auf den Träger, z.B. das Förder- oder Formband und/oder die Kuchenoberseite ein Trennmittel aufgebracht, insbesondere aufgesprüht werden. Besonders bevorzugt wird auf die Presselemente der Presse das Trennmittel, z. B. eine verschiedene Polymere aufweisende, insbesondere silikonhaltige Flüssigkeit aufgetragen, wodurch ein Verkleben des Spankuchens/ der Spanplatte mit den Presselementen verhindert wird. Zum Auftragen auf die Presselemente sind die Trennmittel bevorzugt mit einem fluiden Medium, insbesondere Wasser vermischt.

Optional kann der Presse eine Vorrichtung zum Abkühlen der Spanplatte nachgeschaltet sein, insbesondere eine Vorrichtung zum Abkühlen unter einem vorgegebenen Pressdruck, der geringer sein kann als der Pressdruck während des Pressens der Spanplatte. Alternativ und/oder zusätzlich kann die Spanplatte bei Raumtemperatur gekühlt werden.

Zur Herstellung der Spanplatte können auch ein oder mehrere Additive, z.B. Antioxidantien, Lichtschutzmittel, Antistatika, Farbmittel, Fungizide, Flammschutzmittel, Mittel zum Einstellen der thermischen oder elektrischen Leitfähigkeit, oder auch ein oder mehrere Füllstoffe eingesetzt werden. Als Füllstoff können z.B. mineralische Partikel, aber auch keramische, synthetische oder Partikel aus Glas oder Kunststoff Verwendung finden. Es kann auch eine Kombination an Additiven oder Füllstoffen auf die Späne aufgetragen werden, entweder einzeln oder als Gemisch. Füllstoff und/oder Additive können auch in Mischung mit dem Klebstoff aufgebracht, insbesondere aufgetragen werden.

Gemäß einer vorteilhaften Ausführung der Erfindung wird vor dem Verpressen des Spankuchens, insbesondere nach dem Beleimen der Späne ein Hydrophobierungsmittel auf die Späne aufgebracht. Als Hydrophobierungsmittel sind z. B. Paraffin oder Wachs vorgesehen, die typischerweise in Mengen von bis zu 5 Gew.-%/ atro Holz eingesetzt werden, meist in Mengen von bis zu 2 Gew.-% / atro Holz, oft in einer Menge von 0,1 Gew.-% / atro Holz bis 1 Gew.-% / atro Holz, ggf. bis 1,5 Gew.-% / atro Holz. Der Einsatz von Hydrophobierungsmitteln trägt zu einer Reduzierung der Quellungsneigung der Spannplatte und zu einer Steigerung der Feuchtebeständigkeit der Spanplatte bei.

Gemäß einer vorteilhaften Weiterbildung der Erfindung wird die Spanplatte nach dem Verpressen geschliffen. Hierzu kann eine Schleifvorrichtung mit einem Schleifmittel, z.B. einem Schleifpapier und/oder bevorzugt einem Schleifband vorgesehen sein. Üblicherweise wird in zwei Schleifgängen geschliffen, wobei Schleifmittel mit einer Körnung von 50-60 im ersten Schleifgang und 80-100 im zweiten Schleifgang eingesetzt werden. Die Spanplatte weist eine im Vergleich zu bekannten Spanplatte gemäß DIN EN 312 härtere Oberfläche auf, bei der eine gröbere Körnung des Schleifmittels bevorzugt wird. Vorzugsweise beträgt die Körnung in beiden Schleifgängen maximal 60, bevorzugt maximal 50, besonders bevorzugt maximal 40.

Die mit dem vorstehend beschriebenen Verfahren hergestellte Spanplatte kann durch unterschiedliche Kombinationen von Spänen, Klebstoff, Füllstoffen und ggf. anderen Additiven wie Wachsen an verschiedene Anforderungen angepasst werden. Es wird deshalb ausdrücklich darauf verwiesen, dass die im Zusammenhang mit dieser Erfindung beschriebenen Merkmale jeweils frei miteinander kombiniert werden können.

Die Erfindung betrifft weiter eine Spanplatte mit einem Klebstoffanteil von mindestens 12%/atro Holz. Die Spanplatte wird insbesondere mit dem vorstehend beschriebenen Verfahren hergestellt. Die Spanplatte ist bevorzugt wasserfest und damit auch feuchtigkeitsbeständig. Sie hat ein ausgezeichnetes und ungewöhnliches Quell- und Schwindverhalten, bei dem eine geringe Quellung mit einer weitgehenden Rückbildung der Quellung beim nachfolgenden Trocknen einhergeht.

Die Spanplatte ist infolge des Pressens plattenförmig gebildet, d. h sie weist in der Regel zwei Hauptflächen auf, die im Folgenden auch als Ober- und Unterseite bezeichnet werden. Die Ober- und Unterseite sind durch die Dicke der Spanplatte voneinander beabstandet. Zwischen Ober- und Unterseite erstrecken sich die Schmalflächen der Spanplatte, die jeweils an den Kanten in die Ober- bzw. Unterseite übergehen. Die Dicke der fertigen Spanplatte kann von 2 mm bis 80 mm betragen, typischerweise zwischen 3 mm und 50 mm, meist zwischen 3 mm und 32 mm. Eine typische Anwendung kann eine Dicke der Spanplatten von 6 mm bis 32 mm erfordern. Die Spanplatte kann ebene Hauptflächen aufweisen; die Ober- und/oder Unterseite können aber auch geprägt oder gefräst oder in anderer Weise bearbeitet sein, so dass sich, bezogen auf die Fläche der Spanplatte, eine variable Dicke der Spanplatte ergibt.

Die Spanplatte weist bevorzugt über die Dicke eine ungerade Anzahl an Schichten auf. Sie ist z. B. einschichtig, drei- oder fünfschichtig. Die Schmalflächen der Spanplatte können mit üblichen Werkzeugen bearbeitet werden. Sie können gesägt, geschnitten oder gefräst werden. Die Spanplatte kann in ihrer maximalen Länge und Breite nach Bedarf, beispielsweise im Verlauf der Endfertigung abgelängt werden. Kleinere Abmessungen können beispielsweise durch Zerlegen der ursprünglich in der Presse hergestellten Spanplatte hergestellt werden. Typische Abmessungen der Spanplatte können sein 6700 mm (Länge) x 2500 mm (Breite) nach Herstellung in der Presse, 1380 mm x 195 mm, nach Aufteilen in Boden-, Wand- oder Deckenpaneele oder 3048 mm x 2800 mm. Letzteres Format eignet sich besonders gut zur Verwendung im Bau, weil die Breite der Platte einer üblichen Geschosshöhe entspricht.

Vorteilhaft weist die Spanplatte nur eine minimale Dickenquellung, insbesondere entsprechend des in der DIN EN 317 beschriebenen Prüfverfahrens auf, die bezogen auf die ursprüngliche Plattendicke, weniger als 5%, vorteilhaft weniger als 4% bevorzugt weniger als 3%, besonders bevorzugt weniger als 2,5% beträgt. Ebenso vorteilhaft weist eine unbeschichtete Spanplatte eine Kantenquellung entsprechend des in EN-13329 beschriebenen Prüfverfahrens von weniger als 6% bevorzugt weniger als 5% und eine beschichtete Spanplatte besonders bevorzugt eine Kantenquellung von weniger als 4% auf. Die Quellung kann gegenüber einer aus gleichem Spanmaterial aber mit geringerem Klebstoffeinsatz und anderen Klebstoffarten hergestellten Standardspanplatte von gleicher Dicke um über 90% reduziert sein. Ein Wert von unter 5% für die Kantenquellung der unbeschichteten Spanplatte und von unter 4% für die Kantenquellung bei einer beschichteten Spanplatte ist also eine außergewöhnliche Verbesserung gegenüber bekannten Spanplatten gemäß Din EN 312.

Die mittlere Dichte der Spanplatte beträgt erfindungsgemäß 800 kg/m³ bis 970 kg/m³, besonders bevorzugt 850 kg/m³ bis 950 kg/m³. Sie liegt damit um ca. 100 kg/m³ bis 300 kg/m³ höher als bei bekannten Spanplatten des Typs P2 gemäß DIN EN 312.

Die Spanplatte weist sehr gute Festigkeitseigenschaften, insbesondere eine hohe Querzugfestigkeit auf, die mindestens 2,5 N/mm², bevorzugt bis zu 3 N/mm², insbesondere bis zu 4 N/mm² beträgt. Bevorzugt weist die Spanplatte ein E-Modul von 3000 N/mm² bis 5000 N/mm², vorteilhaft von 3500 bis 5000 N/mm², besonders bevorzugt von 4000 bis 5000 N/mm² auf. Aus den guten Festigkeitseigenschaften resultiert, dass zum Befestigen der Spanplatte weniger Befestigungsmittel, z. B. Schrauben, eingesetzt werden müssen, weil das einzelne Befestigungsmittel besseren Halt in der Platte hat. Die höhere Querzugfestigkeit erlaubt zudem eine intensivere Bearbeitung einer Spanplatte, z. B. das Fräsen einfacher Profile in die Seitenkante einer Platte. So kann z.B. in die Schmalfläche einer Spanplatte zumindest ein einfaches Profil, beispielsweise ein Feder/Nut-Profil eingearbeitet werden, das zwei ineinandergreifende Platten sowohl in vertikaler als auch in horizontaler Richtung zueinander ausrichtet. Eine hohe Biegefestigkeit der Spanplatte von mindestens 35 N/mm², bevorzugt mindestens 40 N/mm² lässt eine Verwendung als Konstruktionselement, z. B. Wandaussteifungen zu.

Die Erfindung betrifft weiter die Verwendung der vorstehend beschriebenen Spanplatte für konstruktive Zwecke im Innen- und Außenbereich. Es zeichnet die Spanplatte nach der Erfindung aus, dass diese wegen der minimalen Quellung, insbesondere der reduzierten Dickenquellung im Bereich der Schmalflächen, vielfältig einsetzbar ist. Im Innenausbau kann die Spanplatte z.B. als Fußbodenplatte oder als Fußbodenbelag jeweils mit oder ohne Beschichtung eingesetzt werden. Hier ist der Einsatz, anders als bei z.B. nicht-wasserfesten Fußbodenplatten oder Fußbodenbelägen auch in Feucht- und Nassräumen möglich, insbesondere, weil die Schmalflächen, die ggf. ein Kantenprofil aufweisen, an dem die Platte der Feuchtigkeit frei zugänglich ist, unter Einfluss von Wasser oder hoher Luftfeuchte nicht mehr signifikant quillt bzw. beim Trocknen wieder nahezu vollständig das Ausgangsmaß erlangt.

Damit kann z. B. auf bekannten Vorrichtungen zur Herstellung von Holzwerkstoffplatten nun eine im Wesentlichen nicht-quellende, gegenüber Wasser bzw. Luftfeuchtigkeit form- und maßstabile Spanplatte mit hohen Festigkeitswerten hergestellt werden, die nicht auf schmale Formate begrenzt ist.

Selbstverständlich kann die Spanplatte auch als Wand- oder Deckenplatte, als Möbelplatte und als Konstruktionsplatte, insbesondere beim Ausbau von Feucht- und Nassräumen oder von Labor- und Technikräumen bzw. Werkstätten eingesetzt werden, ist aber nicht beschränkt darauf. Im Außenbau bietet sich die Spanplatte ebenfalls als Konstruktionsplatte an, typisch z. B. als Fassadenplatte, für Außenfensterbänke, Abdeckungen einschließlich Dacheindeckungen und Wandelemente.

Die Spanplatte kann z.B. für den Terrassenbau oder Außenfußböden eingesetzt werden. Auf diese Weise wird es möglich, gleiche Fußböden bzw. Fußbodenbeläge für Innen- und angrenzende Außenbereiche (Terrassen, Balkone, Fassaden, Zuwegungen) einzusetzen. Bevorzugt kann die Spanplatte für Konstruktionen, insbesondere Möbel, im Außenbereich eingesetzt werden. Der Ausbau von Werkstätten, Produktionshallen oder Stallungen kann z.B. ohne Weiteres mit der Spanplatte erfolgen. Ferner kann die Spanplatte nach der Erfindung aufgrund ihrer Wasserbeständigkeit beispielsweise auch für Brandschutzelemente sowie Bauelemente im Schiffbau eingesetzt werden, insbesondere wenn sie mit Brandschutzsubstanzen versehen bzw. beschichtet ist.

Die Spanplatte eignet sich bereits im unbeschichteten Zustand für die vorgenannten Verwendungen. Als beschichtete Spanplatte eignet sie sich aufgrund weiter reduzierter Verformung infolge von Wassereinwirkung noch besser. Die Spanplatte kann optional als Paneel ausgebildet sein und bei Bedarf mit einem Profil an den Kanten versehen sein. Das Profil dient vorzugsweise zum Fixieren von zwei Paneelen aneinander. Zwei nebeneinander angeordnete Paneele können alternativ auch Stoß auf Stoß verbunden sein. Sie können z. B. durch ein Doppelklebeband fixiert werden, das im Bereich seitlich einer Fuge zwischen den unmittelbar aneinander angrenzenden Paneelen angeordnet ist. Auch ein Verkleben von unmittelbar aneinander angrenzenden Paneelen oder Platten ist möglich, wobei bevorzugt ein wasserfester Klebstoff eingesetzt wird.

Nachfolgend wird ein Ausführungsbeispiel der Erfindung anhand von Zeichnungen näher erläutert. Hierbei zeigen:
- Fig. 1: ein Ablaufdiagramm eines Verfahrens zur Herstellung einer Spanplatte;
- Fig. 2: in schematischer Darstellung eine perspektivische Ansicht auf eine Spanplatte;
- Fig.3: ein Rohdichteprofil eines Ausführungsbeispiels (Erfindung 1) der Spanplatte und
- Fig.4: ein Rohdichteprofil einer Standardspanplatte des Typs P2 gemäß DIN EN 312.

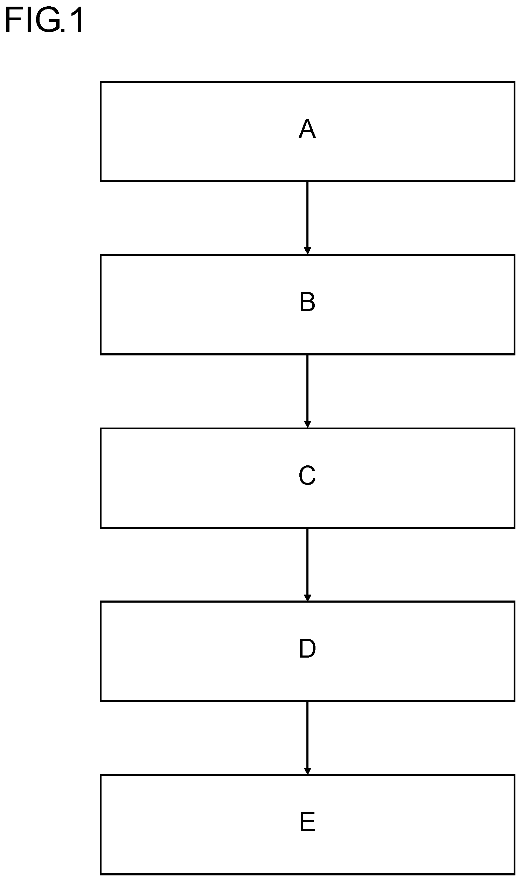

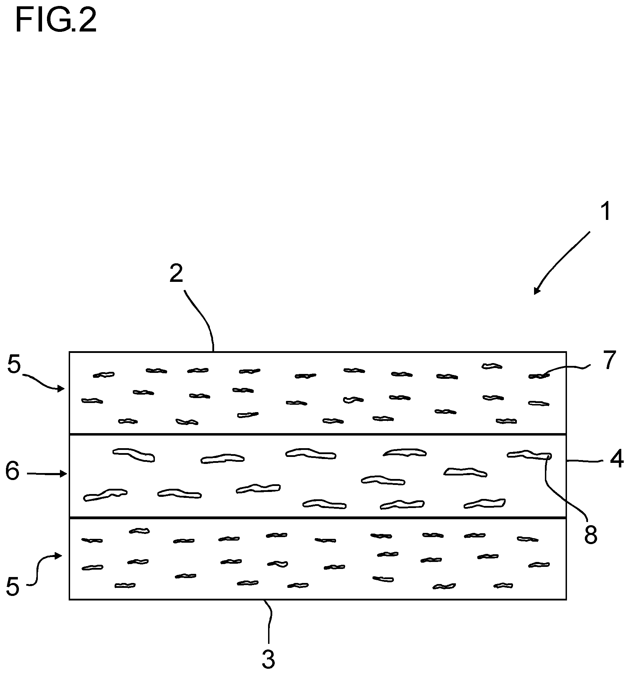

Figur 1 zeigt ein Ablaufdiagramm eines Verfahrens zur Herstellung einer gemäß Figur 2 dargestellten Spanplatte 1.

Das Verfahren weist die folgenden Schritte auf:
- Bereitstellen von Spänen (A)
- Bereitstellen von Klebstoff (B)
- Aufbringen des Klebstoffs (C)
- Formen eines Spankuchens (D)
- Verpressen des Spankuchens (E)

Für die Bereitstellung von Spänen wird zunächst lignocellulosisches Material, typisch Holz, z.B. Rundholz, Frischholz, Altholz oder Restholz, aber auch Einjahrespflanzen wie Stroh oder Bagasse in einem ein- oder mehrstufigen Zerspanungsvorgang beispielsweise in Trommel- und Scheibenhacker sowie Messerringzerspaner zu Spänen 7, 8 verarbeitet. Die Späne 7,8 werden anschließend z.B. in einem Einzug- oder Dreizug Trommeltrockner getrocknet und beispielsweise mittels eines Siebs in feine Späne 7 und grobe Späne 8 fraktioniert.

Als Klebstoff wird eine Mischung aus einer ersten, duroplastischen Komponente und einer zweiten, thermoplastischen Komponente eingesetzt. Die duroplastische Komponente kann aus Aminoplaste, wie Melaminharz, Benzoguanaminharz oder Harnstoffharz oder aus Phenoplasten, wie Phenolharz gewählt werden, die jeweils einzeln oder in Mischung eingesetzt werden können. Die zweite Komponente wird aus MDI, eMDI, PMDI oder Polyurethan gewählt, die ebenfalls jeweils einzeln oder in Mischung eingesetzt werden können. Bevorzugt wird, wie auch beim Ausführungsbeispiel, Melaminharz in Kombination mit PMDI bereitgestellt. Auf das Bereitstellen der Späne und des Klebstoffs folgt das Aufbringen, hier z.B. Auftragen des Klebstoffs auf die Späne.

Der Klebstoff wird in einer bekannten Vorrichtung zum Beleimen von Spänen durch Düsen versprüht. Der durch die Düsen erzeugte Sprühnebel schlägt sich auf der Oberfläche der Späne nieder, die den Sprühnebel passieren, z. B. von oben nach unten durch den Sprühnebel aus Klebstoff fallen. Zusätzlich zu dem Klebstoff wird auf die Späne ein Hydrophobierungsmittel, hier z.B. Paraffin, mit einem Anteil von 1 Gew.-%/atro Holz aufgebracht. Der erfindungsgemäß hohe Anteil des Klebstoffs von hier 25 Gew.-%/atro Holz in den Deckschichten und 30 Gew.-%/atro Holz in der Mittelschicht kann in einem oder mehreren Durchgängen erfolgen, je nach Art, Menge und Kombination der Komponenten des Klebstoffs. Falls erforderlich, können die Späne nach dem Auftragen einer Komponente des Klebstoffs getrocknet werden. Nach dem vollständigen Auftrag des Klebstoffs werden die Späne getrocknet.

Der Auftrag des Klebstoffs erfolgt getrennt, z. B. für feine Späne, aus denen Deckschichten hergestellt werden sollen und für gröbere Späne für die Mittelschicht. Auch die Zusammensetzung des Klebstoffs kann für feine Späne anders gewählt werden als für gröbere Späne, z. B. mit einem geringeren Anteil einer ersten, thermoplastischen Komponente des Klebstoffs im Vergleich zum Klebstoff für gröbere Späne. Vorliegend wird der Klebstoff mit einer ersten Komponente aus Melaminharz und mit einer zweiten Komponente aus PMDI im Verhältnis 4:1 für die Deckschicht und im Verhältnis 5:1 für die Mittelschicht eingesetzt, wobei im Durchschnitt 27,5 Gew.-% bezogen auf atro Holz eingesetzt werden, aufgeteilt in 25 Gew.-%/atro Holz Klebstoff in den Deckschichten, die jeweils 25 %, zusammen 50% der Plattenmasse einnehmen und 30 Gew.-%/atro Holz Klebstoff in der Mittelschicht, die ebenfalls 50% der Plattenmasse einnimmt. Es liegt auf der Hand, dass sowohl die Anteile von Mittelschicht und Deckschichten variieren können, also auch die Einsatzmenge des Klebstoffs.

Nach dem Auftragen des Klebstoffs und dem Trocknen werden die Späne 7, 8 in einer bekannten Streuvorrichtung aufgetragen und zu einem Spankuchen gestreut, z. B. für die Bildung einer unteren Deckschicht 5, einer Mittelschicht 6 und einer oberhalb liegenden Deckschicht 5. Die feinen Späne 7 werden für die Deckschichten 6 beispielsweise mittels des bekannten Windstreuverfahrens abgelegt. Die gröberen Späne 8 werden für die Mittelschicht 6 z.B. mittels des bekannten Wurfstreuverfahrens abgelegt.

Anschließend wird der dreischichtige Spankuchen in einer bekannten kontinuierlich arbeitenden Doppelbandheißpresse bei Temperaturen von 160 °C bis 240 °C, vorliegend z. B. 180 °C und einem Druck von bis zu 5 N/mm², hier: 4,5 N/mm² bei einem Pressfaktor von 6 s/mm bis 20 s/mm, hier: 9,35 s/mm verpresst. Vor und/oder während des Verpressens des Spankuchens wird auf die Pressbleche bzw. Pressbänder der Presse zum Schutz vor Verklebungen ein mit Wasser vermischtes Trennmittel, z.B. eine verschiedene Polymere aufweisende, hier silikonhaltige Flüssigkeit aufgebracht. Die Spanplatte wird im Anschluss an das Verpressen vorteilhaft bei Raumtemperatur gekühlt. In einer bekannten Schleifvorrichtung werden die Ober- und Unterseite 2, 3 der Spanplatte anschließend in zwei Schleifgängen jeweils mit einem Schleifmittel mit einer Körnung von hier z.B. 50 geschliffen.

In weiteren Schritten kann die Spanplatte beispielsweise zugeschnitten, gefräst und/oder beschichtet, z. B. lackiert, kaschiert oder bedruckt werden. Sie wird dann in der Regel gestapelt und gelagert und/oder für einen Transport vorbereitet werden.

Die mit dem vorstehend beschriebenen Verfahren hergestellte Spanplatte 1 weist nach einer bevorzugten Ausführung, wie in Fig. 2 dargestellt, eine Oberseite 2, eine Unterseite 3 und eine Schmalfläche 4 sowie eine obere und eine untere Deckschicht (DS) 5 und eine zwischen den Deckschichten angeordnete Mittelschicht (MS) 6 auf. Die Mittelschicht 6 weist im Wesentlichen gröbere Späne 8 auf und die Deckschichten 5 weisen im Wesentlichen feine Späne 7 auf. Die Späne 7 und 8 sind jeweils in Klebstoff eingebettet. Der Anteil des Klebstoffs beträgt mehr als 15 Gew.-%/ atro Holz, hier im Durchschnitt 27,5 Gew.-%/ atro Holz.

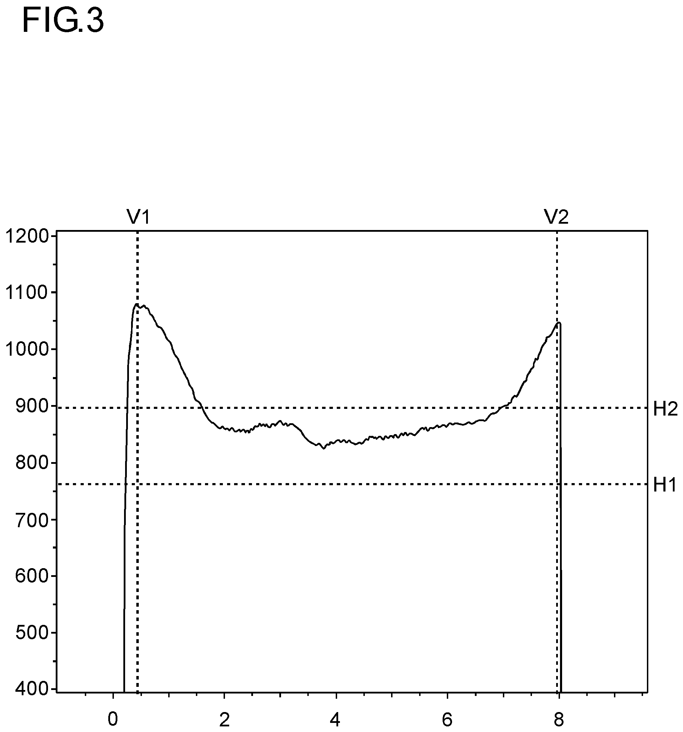

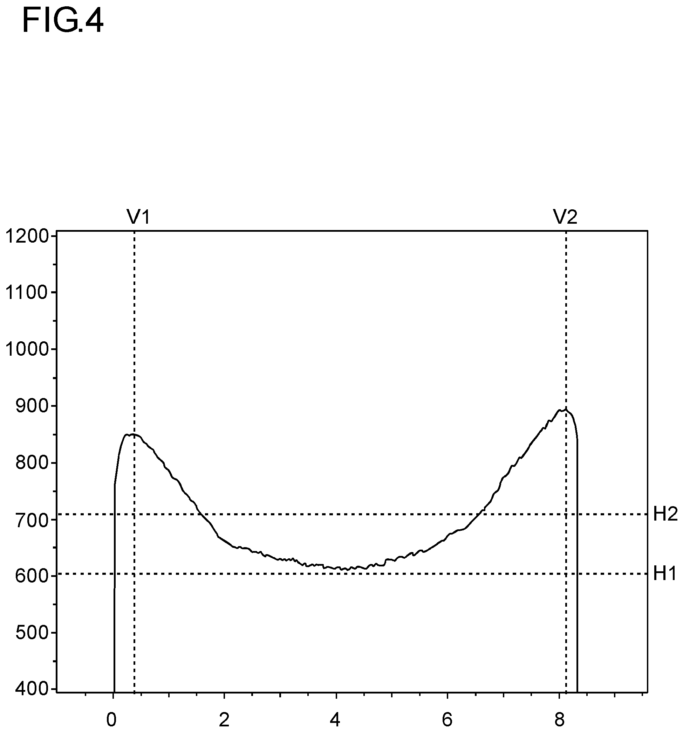

Die Spanplatte 1 wird mit einer Standardspanplatte der Klasse P2 (DIN EN 312:2010) verglichen, die aus demselben Spanmaterial und mit denselben Komponenten des Klebstoffs, jedoch mit einem deutlich geringeren Klebstoffanteil in der Mittel- und den Deckschichten hergestellt wurde, wobei die Deckschichten der Standardspanplatte P2 kein PMDI aufweisen. Insgesamt ist der Anteil an PMDI in der Mittelschicht einer Standardspanplatte (0,1 bis 0,6 Gew.-%/atro Holz) weitaus geringer als bei der Spanplatte (5 Gew.-%/atro Holz). Fig. 3 und 4 zeigen die Dichteverteilung über den Querschnitt der Spanplatte. Es ist jeweils die Dichte in kg/m³ über der Position entlang der Plattendicke in mm angetragen. Weiter zeigen in Fig. 3 und 4 jeweils durch die Linie H1 die mittlere Dichte, durch die Linie H2 85 % der mittleren Dichte, durch die Linie V1 die maximale Dichte links (erste Deckschicht) und durch die Linie V2 die maximale Dichte rechts (zweite Deckschicht). Die Spanplatte weist eine mittlere Dichte von 850 kg/m³ bis 950 kg/m³, hier gemäß Fig. 3 z.B. 897 kg/m³ auf. Die Standardspanplatte P2 weist im Vergleich dazu bei einer vergleichbaren Dicke eine mittlere Dichte von 640 bis 720 kg /mm³, hier gemäß Fig. 4 z.B. 707 kg/mm³ auf. Weiter weist die Spanplatte in den Deckschichten 5 (Linien V1 und V2) eine maximale Dichte von ca. 1080 kg/mm³ auf. Die Standardspanplatte P2 weist vergleichsweise in den Deckschichten (Linien V1 und V2) eine maximale Dichte von ca. 850 kg/mm³ auf.

Die nachstehenden Tabellen 1 und 2 zeigen die beiden Spanplatten (Erfindung 1 und Standard) im Vergleich, mit Angabe der Plattendicke in mm als Bruttowert (vor dem Schleifen) und der Dichte in kg/m³. Die Spanplatten wurden jeweils ausgewertet nach Querzugfestigkeit (DIN EN 319), Quellung (gemessen nach DIN EN 317) und Kantenquellung (gemessen nach DIN EN 13329) (siehe Tabelle 2).

Ferner zeigt Tabelle 1 Versuchsergebnisse von zwei weiteren Ausführungsbeispielen (Erfindung 2 und Erfindung 3) der Spanplatte. Das zweite Ausführungsbeispiel unterscheidet sich von dem ersten Ausführungsbeispiel durch eine höhere Plattendicke von 19 mm, eine geringere Zieldichte von 660 kg/m³ , die durch einen geringen Spaneinsatz von 490 kg/m³ sowie eine damit einhergehende geringere Klebstoffeinsatzmenge von 130 kg/m³ erreicht wird. Hingegen unterscheidet sich das dritte Ausführungsbeispiel von dem ersten Ausführungsbeispiel bei gleicher Plattendicke von 8 mm durch eine geringere Zieldichte von 720 kg/m³ , die ebenfalls durch einen geringen Spaneinsatz von 550 kg/m³ sowie eine damit einhergehende, geringere Klebstoffeinsatzmenge von 150 kg/m³ erreicht wird. Auch diese leichteren Spanplatten weisen gegenüber der Standardspanplatte P2 verbesserte Festigkeitseigenschaften und eine verbesserte Wasserbeständigkeit, bzw. - festigkeit auf.

**Tabelle 1**

| Vergleichsversuche einer Standard - und einer Spanplatte nach der Erfindung | | | | | | |
|---|---|---|---|---|---|---|
| Plattentyp | Dicke brutto | Zieldichte | Spaneinsatz | Beleimungsfaktor (DS/MS) | PMDI-Faktor (DS/MS | Klebstoffeinsatzmenge |
| Einheit | [mm] | [kg/m³] | [kg/m³] | [%] | [%] | [kg/m³] |
| Erfindung 1 | 8 | 880 | 670 | 25 / 20 | 5 / 5 | 185 |
| Erfindung 2 | 19 | 660 | 490 | 25 / 20 | 5/5 | 130 |
| Erfindung 3 | 8 | 720 | 550 | 25 / 20 | 5/5 | 150 |
| Standard | 8 | 720 | 633 | 6.2 / 10.4 | - / 0.4 | 55 |

**Tabelle 2**

| Vergleichsversuche zu Quellung und Festigkeitswerten der Standard - und der Spanplatte von Tabelle 1 | | | | | |
|---|---|---|---|---|---|
| Plattentyp | Biegefestigkeit | E-Modul | Querzugfestigkeit | Quellung Rohplatte | Kantenquellung |
| Einheit | [N/mm²] | [N/mm²] | [N/mm²] | [%] | [%] |
| Erfindung 1 | 38 | 4500 | 3 | 2-3 | 3-4 |
| Standard | <25 | <3000 | <1 | 28 | -* |

| | | | | | |
|---|---|---|---|---|---|
| *nicht messbar | | | | | |

Die Spanplatte nach der Erfindung muss stärker verdichtet werden als eine konventionelle Standardspanplatte. Der Klebstofffaktor ist um ca. das 2- bis 5-Fache höher als bei der Spanplatte nach dem Stand der Technik, in den Beispielen gemäß Tabelle 1 um das ca. 3-Fache. Der Anteil der zweiten Komponente des Klebstoffs ist weitaus höher als bei der Standardspanplatte; er ist im Vergleich zum gesteigerten Einsatz der ersten Komponente überproportional erhöht, um mehr als das 10-fache. Die Spanplatte weist eine um den Faktor 10 reduzierte Quellung der Rohplatte (DIN EN 317) und eine um mehr als das Dreifache höhere Querzugfestigkeit (DIN EN 319) auf. Ferner weist die Spanplatte im Vergleich zur Standardspanplatte P2 einen um mehr als das 1,5-Fache höheren E-Modul und eine um mehr als das 1,5-Fache höhere Biegefestigkeit auf.

Nach dem Beschichten der Ober- und Unterseite wird die Kantenquellung an einer beschichteten Platte gemessen. Nur noch die Schmalflächen der Spanplatten sind der Einwirkung von Wasser zugänglich, da die Ober- und Unterseite der Platte durch das Beschichten versiegelt und dem Wasser nicht mehr zugänglich sind. Dieser Test ist gerade für Fußbodenbeläge von besonderer Bedeutung, weil die Schmalflächen der Fußböden in der Regel nicht versiegelt werden können und so dem Wasser ausgesetzt sind. Hier zeigt sich eine signifikant reduzierte Kantenquellung für die Spanplatte im Vergleich mit einer bekannten Spannplatte, deren Kantenquellung so hoch ist, dass der Wert nicht gemessen werden konnte. Beide, die Standardspanplatte und die Spanplatte, wurden auf denselben industriellen Produktionsanlagen hergestellt.

### Bezugszeichenliste

- 1: Spanplatte
- 2: Oberseite
- 3: Unterseite
- 4: Schmalfläche
- 5: Deckschicht
- 6: Mittelschicht
- 7: feiner Span
- 8: grober Span
- A: Bereitstellen von Spänen
- B: Bereitstellen von Klebstoff
- C: Auftragen des Klebstoffs
- D: Formen eines Spankuchens
- E: Verpressen des Spankuchens
- H1: mittlere Dichte
- H2: 85% der mittleren Dichte
- V1: maximale Dichte links
- V2: maximale Dichte rechts

## Patentansprüche

1. Verfahren zur Herstellung einer Spanplatte, mit den Schritten
- Bereitstellen von aus Zerspanung gewonnenen Spänen (7,8) aus Holz,
- Bereitstellen von wenigstens einem Klebstoff, der zumindest eine erste Komponente aus einem duroplastischen Material und eine zweite Komponente aus einem thermoplastischen Material aufweist;
- Aufbringen des Klebstoffs auf die Späne (7, 8), wobei ein Klebstoffanteil von mindestens 12 Gew.-%/atro Holz auf die Späne (7, 8) aufgebracht wird, und
- ein Elastomer oder ein Thermoplast als elastifizierender Zusatz zum Modifizieren der elastischen Eigenschaften der Spanplatte (1) zugesetzt wird, der als Feststoff berechnet anteilig bezogen auf die Gesamtmenge der Spanplatte (1) atro in einer Menge von 1 Gew.-% bis zu 5 Gew.-% eingesetzt wird,
- Formen eines ein- oder mehrschichtigen Spankuchens wobei der mehrschichtige Spankuchen mindestens Deckschichten und eine Mittelschicht aufweist und
- Verpressen des Spankuchens in einer Heißpresse zum Erzeugen einer Spanplatte (1), wobei
- der Klebstoff bei einem mehrschichtigen Aufbau der Platte (1) auch in den Deckschichten (5) eingesetzt wird und
- als elastifizierender Zusatz Acrylat, Styrolacrylat oder Polyurethan in Form eines flüssigen Zusatzes sowie Mono- oder Diethylenglycol auf die Späne (7, 8) aufgetragen wird, und wobei
- die Spanplatte eine mittlere Dichte von 800 kg/m³ bis 970 kg/m³ aufweist.

2. Verfahren nach Anspruch 1, **dadurch gekennzeichnet, dass** die erste Komponente und die zweite Komponente des Klebstoffs in einem Verhältnis von erster Komponente zu zweiter Komponente von 2:1 bis 5:1, vorteilhaft von 3:1, bevorzugt 4:1 oder 5:1 auf die Späne (7, 8) aufgebracht werden.

3. Verfahren nach Anspruch 2, **dadurch gekennzeichnet, dass** als erste, duroplastische Komponente des Klebstoffs ein Kondensationsharz, insbesondere ein Aminoplast, wie ein Melaminformaldehydharz, ein Benzoguanaminharz oder ein Harnstoffformaldehydharz, oder ein Phenoplast, wie ein Phenolformaldehydharz jeweils einzeln oder in Mischung eingesetzt werden.

4. Verfahren nach Anspruch 2 oder 3, **dadurch gekennzeichnet, dass** als zweite, thermoplastische Komponente des Klebstoffs technisches Diphenylmethandiisocyanat PMDI, Methylendiphenylisocyanat MDI, auch in emulgierter Form als eMDI, aber auch Polyurethan jeweils einzeln oder in Mischung eingesetzt werden.

5. Verfahren nach einem der vorherigen Ansprüche, **dadurch gekennzeichnet, dass** eine oder mehrere Komponenten des Klebstoffs einzeln und/oder in Mischung auf die Späne (7, 8) aufgebracht werden.

6. Verfahren nach einem der vorherigen Ansprüche, **dadurch gekennzeichnet, dass** auf die Späne (7, 8) ein Klebstoffanteil von mindestens 15 Gew.-%/atro Holz, bevorzugt mindestens 17 Gew.-% /atro Holz, besonders bevorzugt mind. 20 Gew.-% /atro Holz, ganz besonders bevorzugt mind. 25 Gew.-% /atro Holz aufgebracht wird.

7. Verfahren nach einem der vorherigen Ansprüche, **dadurch gekennzeichnet, dass** der elastifizierende Zusatz vor oder bevorzugt nach dem Klebstoff auf die Späne (7, 8) aufgetragen wird.

8. Verfahren nach einem der vorherigen Ansprüche, **dadurch gekennzeichnet, dass** die Spanplatte (1) mindestens Deckschichten (5) und eine Mittelschicht (6) aufweist, wobei die Deckschicht (5) und die Mittelschicht (6) jeweils unterschiedliche Klebstoffe und/oder unterschiedliche Klebstoffzusammensetzungen aufweisen.

9. Verfahren nach einem der vorherigen Ansprüche, **dadurch gekennzeichnet, dass** die Späne (7, 8) in einer kontinuierlichen Presse mit einem Pressfaktor, also die Zeit des Einwirkens von Presselementen der Presse auf den Spankuchen bezogen auf die Plattendicke, von mindestens 6 s/mm bis 20 s/mm, bevorzugt 8 s/mm bis 18 s/mm, besonders bevorzugt 9 bis 15 s/mm verpresst werden.

10. Verfahren nach einem der vorherigen Ansprüche, **dadurch gekennzeichnet, dass** die Späne (7, 8) mit einem Pressdruck von 2 bis 5 MPa, bevorzugt 3 bis 5 MPa, besonders bevorzugt 3,5 bis 5 MPa verpresst werden.

11. Verfahren nach einem der vorherigen Ansprüche, wobei die Spanplatte (1) nach dem Verpressen und/oder nach dem Kühlen geschliffen wird, **dadurch gekennzeichnet, dass** ein Schleifmittel mit einer Körnung von maximal 60, bevorzugt maximal 50, besonders bevorzugt maximal 40 eingesetzt wird.

12. Spanplatte, insbesondere hergestellt durch ein Verfahren nach einem der vorherigen Ansprüche, mit einem ein- oder mehrschichtigen Aufbau, wobei bei einem mehrschichtigen Aufbau mindestens Deckschichten und eine Mittelschicht vorhanden sind, aufweisend aus Zerspanung gewonnene Späne (7, 8) aus Holz und einen Klebstoffanteil von mindestens 12 Gew.-%/atro Holz, wobei
- der Klebstoff zumindest eine erste Komponente aus einem duroplastischen Material und eine zweite Komponente aus einem thermoplastischen Material aufweist, wobei
- ein Elastomer oder ein Thermoplast als elastifizierender Zusatz zugesetzt ist, der als Feststoff berechnet anteilig bezogen auf die Gesamtmenge der Spanplatte (1) atro in einer Menge von 1 Gew.-% bis zu 5 Gew.-% eingesetzt ist, wobei
- der Klebstoff bei einem mehrschichtigen Aufbau der Platte (1) auch in den Deckschichten (5) eingesetzt ist und
- als elastifizierender Zusatz Acrylat, Styrolacrylat oder Polyurethan in Form eines flüssigen Zusatzes sowie Mono- oder Diethylenglykol eingesetzt wurde, und wobei
- die Spanplatte eine mittlere Dichte von 800 kg/m³ bis 970 kg/m³ aufweist.

13. Spanplatte nach Anspruch 12, **gekennzeichnet durch** eine mittlere Dichte von 850 bis 950 kg/m³, bevorzugt 900 bis 950 kg/m³.

14. Verwendung für eine Spanplatte (1) nach einem der Ansprüche 12 oder 13 für konstruktive Zwecke in Innen- und Außenbereich, insbesondere für Fassadenplatten, Außenfensterbänke, Abdeckungen, Dacheindeckungen und Wandelemente sowie Nassräume.

## Claims

1. A method of manufacturing a particle board, comprising the steps of
- providing wood chips (7,8) obtained from chipping,
- providing at least one adhesive which has at least a first component of a thermosetting material and a second component of a thermoplastic material;
- applying the adhesive to the chip material (7, 8), wherein an adhesive content of at least 12% by weight/atro of wood is applied to the chips (7, 8), and
- an elastomer or a thermoplastic is added as an elasticizing additive for modifying the elastic properties of the particle board (1), which, calculated as a solid, is used in a proportion of 1 wt% to 5 wt% based on the total amount of the particle board (1) atro,
- forming a single-layered or multi-layered particle mat, the multi-layered particle mat having at least surface layers and a core layer, and
- pressing the particle mat in a hot press to generate a particle board (1), wherein
- the adhesive is also used in the surface layers (5) in the case of a multi-layered structure of the board (1), and
- acrylate, styrene acrylate or polyurethane in the form of a liquid additive and mono- or diethylene glycol are applied to the chip material (7, 8) as an elasticizing additive, and wherein
- the particle board has an average density of 800 kg/m³ to 970 kg/m³.

2. Method according to claim 1, **characterized in that** the first component and the second component of the adhesive are applied to the chip material (7, 8) in a ratio of first component to second component of 2:1 to 5:1, advantageously of 3:1, preferably 4:1 or 5:1.

3. Method according to claim 2, **characterized in that** a condensation resin, in particular an aminoplast, such as a melamine formaldehyde resin, a benzoguanamine resin or a urea formaldehyde resin, or a phenoplast, such as a phenol formaldehyde resin, are used as the first, thermosetting component of the adhesive, in each case individually or in a mixture.

4. Method according to claim 2 or 3, **characterized in that** technical diphenylmethane diisocyanate PMDI, methylene diphenyl isocyanate MDI, also in emulsified form as eMDI, but also polyurethane are used as the second, thermoplastic component of the adhesive, in each case individually or in a mixture.

5. Method according to one of the previous claims, **characterized in that** one or more components of the adhesive are applied individually and/or in a mixture to the chip materials (7, 8).

6. Method according to one of the previous claims, **characterized in that** an adhesive content of at least 15% by weight/atro wood, preferably at least 17% by weight/atro wood, particularly preferably at least 20% by weight/atro wood, very particularly preferably at least 25% by weight/atro wood is applied to the chip material (7, 8).

7. Method according to one of the previous claims, **characterized in that** the elasticizing additive is applied to the chip material (7, 8) before or preferably after the adhesive.

8. Method according to one of the previous claims, **characterized in that** the particle board (1) has at least surface layers (5) and a core layer (6), wherein the surface layer (5) and the core layer (6) each have different adhesives and/or different adhesive compositions.

9. Method according to one of the preceding claims, **characterized in that** the chips (7, 8) are pressed in a continuous press with a pressing factor, i.e. the time of action of pressing elements of the press on the particle mat relative to the plate thickness, of at least 6 s/mm to 20 s/mm, preferably 8 s/mm to 18 s/mm, particularly preferably 9 to 15 s/mm.

10. Method according to one of the previous claims, **characterized in that** the chip materials (7, 8) are pressed with a pressing pressure of 2 to 5 MPa, preferably 3 to 5 MPa, particularly preferably 3.5 to 5 MPa.

11. Method according to one of the previous claims, wherein the particle board (1) is sanded after pressing and/or after cooling, **characterized in that** an abrasive with a grain size of maximum 60, preferably maximum 50, particularly preferably maximum 40 is used.

12. Particle board, in particular manufactured by a method according to one of the preceding claims, with a single- or multi-layered structure, wherein in the case of a multi-layered structure at least surface layers and a core layer are present, containing wood chips (7, 8) obtained from chipping and an adhesive content of at least 12% by weight/atro of wood, wherein
- the adhesive has at least a first component of a thermosetting material and a second component of a thermoplastic material, wherein
- an elastomer or a thermoplastic is added as an elasticizing additive, which is used in an amount of 1 wt.% to 5 wt.% calculated as a solid in proportion to the total amount of the particle board (1) atro,
**wherein**
- the adhesive is also used in the surface layers (5) in the case of a multi-layered structure of the board (1), and
- acrylate, styrene acrylate or polyurethane in the form of a liquid additive and mono- or diethylene glycol have been used as elasticizing additive, and wherein
- the particle board has an average density of 800 kg/m³ to 970 kg/m³.

13. The particle board according to claim 12, **characterized by** an average density of 850 to 950 kg/m³, preferably 900 to 950 kg/m³.

14. Use for a particle board (1) according to one of claims 12 or 13 for constructive purposes in indoor and outdoor areas, in particular for facade panels, exterior window sills, coverings, roof coverings and wall elements as well as wet rooms.

## Revendications

1. Procédé de fabrication d'un panneau de particules, comprenant les étapes suivantes
- fournir des copeaux de bois (7,8) obtenus par déchiquetage,
- fournir au moins un adhésif ayant au moins un premier composant d'un matériau duroplastique et un second composant d'un matériau thermoplastique ;
- appliquer l'adhésif sur les copeaux (7, 8), une teneur en adhésif d'au moins 12 % en poids/atro de bois étant appliquée sur les copeaux (7, 8), et
- un élastomère ou un thermoplastique est ajouté en tant qu'additif élastifiant pour modifier les propriétés élastiques du panneau de particules (1), qui, calculé en tant que solide, est utilisé dans une proportion de 1 % en poids à 5 % en poids par rapport à la quantité totale du panneau de particules (1) atro,
- former un gâteau aux particules monocouche ou multicouche, le gâteau aux particules multicouche ayant au moins des couches superficielles et une couche centrale, et
- presser le gâteau aux particules dans une presse à chaud pour produire un panneau de particules (1),
dans lequel
- l'adhésif est également utilisé dans les couches de surface (5) dans le cas d'une structure multicouche du panneau (1), et
- en tant qu'additif élastifiant, de l'acrylate, du styrène-acrylate ou du polyuréthane sous forme d'additif liquide ainsi que du mono- ou diéthylène glycol est appliqué sur les copeaux (7, 8), et dans lequel
- le panneau de particules a une densité moyenne de 800 kg/m³ à 970 kg/m³.

2. Procédé selon la revendication 1, **caractérisé par le fait que** le premier composant et le second composant de la colle sont appliqués sur le matériau en copeaux (7, 8) dans un rapport de premier composant à second composant de 2:1 à 5:1, avantageusement de 3:1, de préférence de 4:1 ou 5:1.

3. Procédé selon la revendication 2, **caractérisé par le fait que** une résine de condensation, en particulier une aminoplaste, telle qu'une résine mélamine-formaldéhyde, une résine benzoguanamine ou une résine urée-formaldéhyde, ou une phénoplaste, telle qu'une résine phénol-formaldéhyde, est utilisée comme premier composant duroplastique de l'adhésif, dans chaque cas individuellement ou en mélange.

4. Procédé selon la revendication 2 ou 3, **caractérisé par le fait que** le diisocyanate de diphénylméthane technique PMDI, l'isocyanate de méthylène diphényle MDI, également sous forme émulsifiée comme eMDI, mais aussi le polyuréthane sont utilisés comme deuxième composant thermoplastique de l'adhésif, dans chaque cas individuellement ou dans un mélange.

5. Procédé selon l'une des revendications précédentes, **caractérisé par le fait qu'**un ou plusieurs composants de l'adhésif sont appliqués individuellement et/ou en mélange sur les matériau en copeaux (7, 8).

6. Procédé selon l'une des revendications précédentes, **caractérisé par le fait qu'**une teneur en adhésif d'au moins 15 % en poids/atro bois, de préférence d'au moins 17 % en poids/atro bois, de préférence d'au moins 20 % en poids/atro bois, de préférence d'au moins 25 % en poids/atro bois est appliquée sur le matériau en copeaux (7, 8).

7. Procédé selon l'une des revendications précédentes, **caractérisé par le fait que** l'additif élastifiant est appliqué sur le matériau en copeaux (7, 8) avant ou, de préférence, après l'adhésif.

8. Procédé selon l'une des revendications précédentes, **caractérisé par le fait que** le panneau de particules (1) comporte au moins des couches de surface (5) et une couche centrale (6), la couche de surface (5) et la couche centrale (6) ayant chacune des adhésifs différents et/ou des compositions d'adhésifs différentes.

9. Procédé selon l'une des revendications précédentes, **caractérisé par le fait que** les copeaux (7, 8) sont pressés dans une presse continue avec un facteur de pressage, c'est-à-dire le temps d'ac tion des éléments de pressage de la presse sur le gâteau aux particules par rapport à l'épaisseur de la plaque, d'au moins 6 s/mm à 20 s/mm, de préférence de 8 s/mm à 18 s/mm, de manière particulièrement préférée de 9 à 15 s/mm.

10. Procédé selon l'une des revendications précédentes, **caractérisé par le fait que** les matériaux en copeaux (7, 8) sont pressés avec une pression de pressage de 2 à 5 MPa, de préférence de 3 à 5 MPa, de préférence encore de 3,5 à 5 MPa.

11. Procédé selon l'une des revendications précédentes, dans lequel le panneau de particules (1) est poncé après le pressage et/ou le refroidissement, **caractérisé par** l'utilisation d'un abrasif d'une granulométrie maximale de 60, de préférence maximale de 50, en particulier maximale de 40.

12. Panneau de particules, en particulier fabriqué par un procédé selon l'une des revendications précédentes, avec une structure à une ou plusieurs couches, dans laquelle, dans le cas d'une structure à plusieurs couches, au moins des couches de surface et une couche centrale sont présentes, contenant des copeaux de bois (7, 8) obtenus par déchiquetage et une teneur en adhésif d'au moins 12 % en poids/atro de bois, dans laquelle
- l'adhésif comporte au moins un premier composant d'un matériau duroplastique et un second composant d'un matériau thermoplastique, dans lequel
- un élastomère ou un thermoplastique est ajouté en tant qu'additif élastifiant, utilisé dans une proportion de 1 % en poids à 5 % en poids calculé en tant que solide par rapport à la quantité totale du panneau de particules (1) atro,
**dans lequel**
- l'adhésif est également utilisé dans les couches de surface (5) dans le cas d'une structure multicouche du panneau (1), et
- l'on a utilisé comme additif élastifiant de l'acrylate, du styrène-acrylate ou du polyuréthane sous forme d'additif liquide ainsi que du mono- ou diéthylèneglycol, et dans lequel
- le panneau de particules a une densité moyenne de 800 kg/m³ à 970 kg/m³.

13. Le panneau de particules selon la revendication 12, **caractérisé par** une densité moyenne de 850 à 950 kg/m³, de préférence de 900 à 950 kg/m³.

14. Utilisation d'un panneau de particules (1) selon l'une des revendications 12 ou 13 à des fins constructives en intérieur et en extérieur, notamment pour des panneaux de façade, des appuis de fenêtre extérieurs, des revêtements, des couvertures de toit et des éléments muraux ainsi que des pièces humides.
